# EUROPEAN PATENT APPLICATION

(11) **EP 2 018 961 A1**
(43) Date of publication of application: **28.01.2009**
(21) Application number: 08010361.7
(22) Date of filing: 06.06.2008
(51) Int. Cl.: B32B 27/08, B32B 27/20, B32B 27/32, B65D 65/40

(54) **Fuel tank for automobile**

(30) Priority: 28.06.2007 JP 2007170371
(71) Applicant: FTS CO., LTD., Kitajima-cho Inazawa-shi Aichi-Ken 492-8540 (JP)
(72) Inventor: Tsutsumi, Daisuke, Inazawa-shi Aichi-Ken, 492-8540 (JP); Yamaguchi, Yasuhiro, Inazawa-shi Aichi-Ken, 492-8540 (JP); Matsumoto, Ritsuya, Kawasaki-shi Kanagawa, 210-8548 (JP)
(74) Representative: Kramer - Barske - Schmidtchen

(57) **Abstract**

The fuel tank for automobiles has the following structure. A main body of a fuel tank has an entire thickness of 3 to 8 mm and is formed of a surface layer, an outer main body layer, an outer adhesive layer, a barrier layer, an inner adhesive layer, and an inner main body layer that are formed in this order from exterior. The surface layer and the inner main body layer are formed from high density polyethylene. The outer main body layer is formed by using as a main material a recycled material of high density polyethylene, contains an inorganic filler having a particle diameter of 10 µm or less in an amount of 10 to 35 wt% with respect to a total weight of the outer main body layer, and has an thickness of 25% to 50% of the entire thickness of the main body. The outer adhesive layer and the inner adhesive layer is formed from a synthetic resin having an adhesion property for both of high density polyethylene and the barrier layer, and the barrier layer is formed from a synthetic resin hardly or never allow fuel permeation.

## Description

### BACKGROUND OF THE INVENTION

### 1. Field of the Invention

This invention relates to a fuel tank made from a thermoplastic synthetic resin and, particularly, to a fuel tank having a main body that is formed by blow-molding a synthetic resin member of a synthetic resin layer having a multilayer structure.

### 2. Related Art

As to a structure for a fuel tank of an automobile or the like, fuel tanks made from a metal have heretofore been used. However, fuel tanks made from a thermoplastic synthetic resin are being used in recent years since the thermoplastic synthetic resin is free from rusting and easily formed into a desired shape.

For production of the synthetic resin fuel tanks for automobiles, a blow molding method has frequently been employed due to its easiness for molding a hollow body. With the blow molding method, an automobile fuel tank is obtained by extruding a parison of a melted thermoplastic synthetic resin member while forming the parison into a cylindrical shape, and injecting the air into the parison held between dies.

In the blow molding, the parison has a multilayer structure in order to ensure strength of the fuel tank and to prevent permeation of a fuel oil. That is, the multilayer structure has a layer formed from an impact resistant resin for ensuring the strength of the fuel tank, a layer formed from a resin having a barrier property for preventing the fuel permeation, and a layer for adhering the two types of layers to each other (see JP-A-9-29904, for example)

In this case, an outer main body layer and an inner main body layer of a main body of a fuel tank is formed from high density polyethylene (HDPE) that is resistant to fuels and has a strength required for the fuel tank, and a thermoplastic synthetic resin member that is formed of an intermediate layer serving as a barrier layer for preventing the fuel permeation is formed between the outer main body layer and the inner main body layer (see JP-A-2003-220840, for example).

Also, for the purpose of environment protection, necessity for recycling has recently been increased, and recycle of the main body of the automobile fuel tank is being developed in the synthetic resin automobile fuel tanks. In this case, since a major part of the fuel tank main body is high density polyethylene (HDPE), a recycled material mainly contains high density polyethylene (HDPE). Therefore, in order to ensure rigidity, the recycled material is used for the outer main body layer of the fuel tank main body that is not directly exposed to the fuel oil.

A new material of high density polyethylene (HDPE) is used for the inner main body layer of the fuel tank main body, and the new material can be reduced in rigidity in some cases due to a slight swelling caused by a fuel oil during use. Therefore, the rigidity is improved by forming a reinforcing rib on the inner main body layer of the fuel tank or by increasing a thickness of the fuel tank inner main body layer. In this case, however, a capacity of the fuel tank is reduced, and a weight of the fuel tank is increased.

Also, there is a fear that the fuel tank is swollen due to an increase in inner pressure thereof caused by an increase in ambient temperature during use of the fuel tank. Therefore, in order to increase the rigidity of the fuel tank, an inorganic filler is mixed with high density polyethylene in some cases (see JP-A-2001-179901 or JP-A-2004-299737, for example). However, when the inorganic filler is mixed, the impact resistance of the fuel tank is deteriorated.

### SUMMARY OF THE INVENTION

An object of this invention is to provide a fuel tank that promotes recycling and is high in rigidity and excellent in impact resistance.

In order to solve the above-described problems, the first aspect of this invention provides an automobile fuel tank having a main body that is formed of a synthetic resin layer having a multilayer structure, wherein
the main body has an entire thickness of 3 to 8 mm and is formed at least of a surface layer, an outer main body layer, an outer adhesive layer, a barrier layer, an inner adhesive layer, and an inner main body layer that are formed in this order from exterior;
the surface layer and the inner main body layer is formed from high density polyethylene (HDPE);
the outer main body layer is formed by using as a main material a recycled material mainly containing high density polyethylene, contains an inorganic filler having a particle diameter of 10 µm or less in an amount of 10 to 35 wt% with respect to a total weight of the outer main body layer, and has a thickness of 25% to 50% of the entire thickness of the main body;
the outer adhesive layer and the inner adhesive layer are formed from a synthetic resin having an adhesion property for both of the high density polyethylene (HDPE) and the barrier layer; and
the barrier layer is formed from a synthetic resin hardly or never allow fuel permeation.

According to this invention, the main body has an entire thickness of 3 to 8 mm and is formed at least of a surface layer, an outer main body layer, an outer adhesive layer, a barrier layer, an inner adhesive layer, and an inner main body layer that are formed in this order from exterior. Therefore, it is possible to satisfy properties of the fuel tank, such as fuel permeation prevention, rigidity, and impact resistance, by the laminated layers, and it is possible to ensure a capacity of the fuel tank by reducing the thickness and to prevent an increase in weight by the strong adhesion between the adjacent layers.

The surface layer and the inner main body layer are formed from high density polyethylene (HDPE). Therefore, it is possible to smoothen a surface by covering a surface of the outer main body layer containing the inorganic filler with the surface layer, and it is possible to achieve improvement in impact resistance of the fuel tank by compensating for a reduction in impact resistance of the outer main body layer as described later in this invention.

The outer main body layer is formed by using as a main material a recycled material mainly containing high density polyethylene, contains an inorganic filler having a particle diameter of 10 µm or less in an amount of 10 to 35 wt% with respect to a total weight of the outer main body layer, and has a thickness of 25% to 50% of the entire thickness of the main body. Therefore, it is possible to achieve recycling of the fuel tank that is formed mainly from the high density polyethylene (HDPE).

It is possible to suppress swelling even when an inner pressure of the fuel tank is increased by improving rigidity of the fuel tank by containing the inorganic filler and setting the thickness to 25% to 50% of the entire thickness of the main body, and it is possible to prevent a reduction in capacity of the fuel tank by the prevention of increase in thickness of the fuel tank. Also, since the inorganic filler is contained in the predetermined amount, it is possible to increase rigidity of the outer main body layer as well as to ensure both of the properties of rigidity and impact resistance of the fuel tank.

The outer adhesive layer and the inner adhesive layer are formed from a synthetic resin having an adhesion property for both of the high density polyethylene (HDPE) and the barrier layer. Therefore, the barrier layer firmly adheres to the outer main body layer and the inner main body layer by the outer adhesive layer and the inner adhesive layer, so that the layers of the fuel tank firmly adhere to one another in an integral fashion, thereby making it possible to ensure the fuel permeation prevention property and strength of the fuel tank.

Since the barrier layer is formed from a synthetic resin that hardly or never allows fuel permeation, it is possible to prevent evaporation of fuel that has permeated outer main body layer after permeating the inner main body layer to the outside of the vehicle.

According to the second aspect of the invention, there is provided an automobile fuel tank wherein the outer main body layer contains modified polyethylene or soft polyethylene.

According to the second aspect of the invention, since the outer main body layer contains modified polyethylene or soft polyethylene, it is possible to improve compatibility between an ethylene-vinyl alcohol copolymer (EVOH) that is a component of the barrier layer contained in a recycled material of high density polyethylene (HDPE) and the like and high density polyethylene (HDPE), thereby improving impact resistance of the outer main body layer.

According to the third aspect of the invention, there is provided an automobile fuel tank wherein the inorganic filler is a plate-like filler.

According to the third aspect of the invention, since the inorganic filler is a plate-like filler, it is possible to enhance a reinforcing effect and to improve rigidity of the outer main body layer with a small amount of the inorganic filler as compared to inorganic fillers having other shapes.

According to the fourth aspect of the invention, there is provided an automobile fuel tank wherein the inorganic filler has undergone a surface treatment.

According to the fourth aspect of the invention, since the inorganic filler has undergone a surface treatment, it is possible to improve compatibility with high density polyethylene (HDPE) to be mixed, thereby achieving good dispersion property into high density polyethylene (HDPE) and improving reinforcing effect and rigidity of the fuel tank.

According to the fifth aspect of the invention, there is provided an automobile fuel tank wherein the inorganic filler is talc or mica.

According to the fifth aspect of the invention, since the inorganic filler is talc or mica, it is possible to improve rigidity as well as fire resistance of the outer main body layer.

According to the sixth aspect of the invention, there is provided an automobile wherein the barrier layer is formed from an ethylene-vinyl alcohol copolymer (EVOH).

According to the sixth aspect of the invention, since the barrier layer is formed from an ethylene-vinyl alcohol copolymer (EVOH), the barrier layer is excellent in gasoline permeation prevention property as well as in processability due to capability of melt molding. Also, the barrier layer exhibits excellent permeation prevention property under a high moisture or to a gasoline containing alcohol.

According to the seventh aspect of the invention, there is provided an automobile fuel tank wherein the inner main body layer has a thickness of 15% to 67% with respect to the entire thickness of the main body.

According to the seventh aspect of the invention, since the inner main body layer has a thickness of 15% to 67% with respect to the entire thickness of the main body, the inner main body layer has a sufficient strength when swollen due to a fuel and ensures impact resistance.

According to the eighth aspect of the invention, there is provided an automobile wherein the main body of the fuel tank is formed by blow molding.

According to the eighth aspect of the invention, since the main body of the fuel tank is formed by blow molding, it is possible to form the hollow fuel tank of the synthetic resin layer having the multilayer structure by one molding and to freely select a shape.

Since the surface layer and the inner main body layer are formed from high density polyethylene (HDPE), it is possible to smoothen a surface by covering a surface of the outer main body layer containing the inorganic filler with the surface layer as well as to improve impact resistance by ensuring rigidity of the fuel tank by the inner main body layer.

Since the outer main body layer is formed mainly from a recycled material of high density polyethylene (HDPE) and contains the inorganic filler having the particle diameter of 10 µm or less in an amount of 10 to 35 wt% with respect to a total weight of the outer main body, it is possible to achieve recycling of the fuel tank that is formed mainly from high density polyethylene (HDPE) as well as to ensure both of rigidity and impact resistance of the fuel tank by the inorganic filler.

Since the barrier layer is formed from the synthetic resin that hardly or never allows fuel permeation, it is possible to prevent permeation of a fuel that has permeated the inner main body layer.

### BRIEF DESCRIPTION OF THE DRAWINGS

Fig. 1 is a perspective view showing a fuel tank according to one embodiment of this invention.
Fig. 2 is a partial enlarged sectional view showing a structure of a main body (outer wall) of the fuel tank of this invention.

### DETAILED DESCRIPTION OF THE PREFERRED EMBODIMENTS

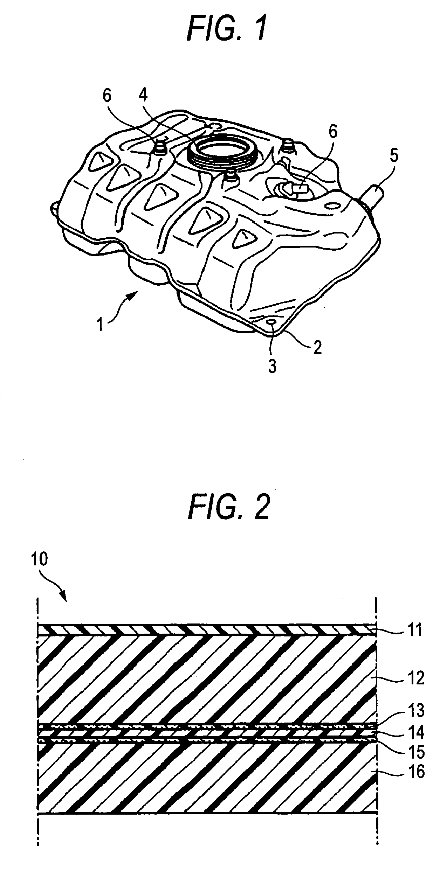

A fuel tank 1 for automobiles according to one embodiment of this invention will be described based on Figs. 1 and 2. Fig. 1 is a perspective view showing the fuel tank 1 according to the embodiment of this invention, and Fig. 2 is a partial sectional view showing an outer wall (main body) 10 of the fuel tank 1 made from a synthetic resin and a structure of a multilayer of the main body 10.

According to the embodiment of this invention, the fuel tank 1 has a pump unit attachment hole 4 that is formed on an upper surface for inserting and withdrawing a fuel pump (not shown) to and from the fuel tank 1. Also, a fuel pouring hole 5 for pouring a fuel from an inlet pipe (not shown) is formed on a side surface or the upper surface of the fuel tank 1.

An outer periphery rib 2 is formed around the fuel tank 1, and attachment holes 3 are formed at a few predetermined positions such as corners of the outer peripheral rib 2, so that the fuel tank is mounted on the automobile body by bolting the attachment holes 3 and the automobile body.

Further, attachment holes 6 are formed on the upper surface of the fuel tank 1 for connecting thereto a horse for collecting internal fuel vapor and the like.

In this embodiment, the fuel tank 1 is formed by blow molding, and the main body 10 is formed of a surface layer 11, an outer main boy layer 12, an outer adhesive layer 13, a barrier layer 14, an inner adhesive layer 15, and an inner main body layer 16 that are formed in this order from exterior as shown in Fig. 2. A parison formed of the above-described six layers is formed in the blow molding. It is also possible to use a parison having a structure layer more than six layers.

The surface layer 11 is formed from a thermoplastic synthetic resin having high impact resistance and capable of maintaining rigidity with respect to a fuel oil and high density polyethylene (HDPE). Since the surface layer 11 covers a surface of the outer main body layer 12 containing an inorganic filler as described later in this invention, it is possible to smoothen the surface by preventing exposure of the inorganic filler to the surface. Further, since the surface layer 11 does not contain the inorganic filler, it is possible to improve impact resistance of the fuel tank 1 in combination with the inner main body layer 16 described later in this specification.

As high density polyethylene (HDPE) used for the surface layer 11 and the inner main body layer 16 describe later in this specification, it is possible to use the following polyethylene, for example.

High density polyethylene having a melt flow rate (MFR: 21.6 kg/10 min) of 5 to 7 and a density (g/cm³) of 0.944 to 0.950 are usable.

The surface layer 11 has a thickness of 5% to 20% of an entire thickness of the main body 10 of the fuel tank 1. Since the main body 10 has the entire thickness of 3 to 8 mm, the surface layer 11 has the thickness ranging from 0.15 mm to 1.6 mm. With such constitution, it is possible to reliably cover the surface of the main body 10 as well as to be in close contact with the outer main body layer 12, thereby preventing a reduction in impact resistance of the fuel tank 1 otherwise caused by contamination of the outer main body layer 12 with the inorganic filler. Since the main material of the surface layer 11 and the outer main body layer 12 is high density polyethylene (HDPE), it is possible to readily bring the surface layer 11 and the outer main body layer 12 into close contact.

The outer main body layer 12 is formed by using as a main material a recycled material mainly containing high density polyethylene. The recycled material mainly containing high density polyethylene (HDPE) is obtained by pulverizing the used and collected fuel tank 1 for recycle or by pulverizing pieces and defective products generated during production of the fuel tank 1 for recycle. Since the fuel tank 1 is formed mainly from high density polyethylene (HDPE), the recycled material obtained by pulverizing the fuel tank 1 mainly contains high density polyethylene (HDPE).

The recycled material may be used in a percentage of 100% or may be used as being mixed with a new material high density polyethylene.

As a compatibility agent, modified polyethylene or soft polyethylene may be contained in the outer main body layer 12. The recycled material such as those obtained by recycling the used and collected fuel tank 1 or scraps and the like generated during production contains ethylene-vinyl alcohol copolymer (EVOH) and the like that is a component of the barrier layer contained in the recycled material. When modified polyethylene or soft polyethylene is contained, the ethylene-vinyl alcohol copolymer (EVOH) is refined to be dispersed into high density polyethylene (HDPE), thereby improving compatibility and achieving sufficient blending. Accordingly, it is possible to improve impact resistance.

As modified polyethylene or soft polyethylene serving as the compatibility agent, the following substances may be used.

Modified polyethylene or soft polyethylene having a melt flow rate (MFR: 21.6 kg/10 min) of 0.4 to 0.7 and a density (g/cm³) of 0.930 to 0.960 is usable.

Modified polyethylene that is modified with maleic anhydride and has a modification amount of 0.1% to 0.5% is usable. With the use of modified polyethylene, blending with a contained filler is improved to prevent the filler from being exposed to the surface.

To the recycled material mainly containing high density polyethylene (HDPE), an inorganic filler having a particle diameter of 10 µm or less is added in an amount of 10 to 22 wt% with respect to a total weight of the outer main body layer 12. Since rigidity is improved when the inorganic filler is contained, it is possible to suppress swelling of the fuel tank 1 even when an inner pressure of the fuel tank 1 is increased and to reduce a thickness of the fuel tank 1, thereby making it possible to achieve a reduction in weight of the fuel tank and prevention of a reduction in tank capacity. Also, it is possible to improve fire resistance.

Talc, mica, clay, silica, calcium carbonate, magnesium hydroxide, calcium sulfate, and the like are usable as the inorganic filler, and talc and mica are preferred. Since talc or mica is a plate-like silica, talc or mica has a higher reinforcing effect as compared to inorganic fillers having other shapes and is capable of sufficiently improve rigidity of the outer main body layer 12 by a small amount.

It is preferable to use talc having an average particle diameter of 2.0 to 8.0 µm, an aspect ratio of 15, and a specific gravity of 2.7 to 2.8.

It is preferable to use mica having an average particle diameter of 20 to 30 µm, an aspect ratio of 10, and a specific gravity of 2.7 to 3.0.

When the inorganic filler is contained in the outer main body layer 12 in an amount of 10 to 35 wt% with respect to the total weight of the outer main body layer 12, it is possible to achieve a sufficient reinforcing effect. In the case where the content is 10 wt% or less, rigidity becomes insufficient, so that swelling suppression effect becomes insufficient when the inner pressure of the fuel tank 1 is increased due to a high temperature or the like. When the content is 35 wt% or more of the outer main body layer 12, impact resistance of the fuel tank 1 becomes insufficient, and adhesion to the surface layer is deteriorated.

The swelling of the fuel tank 1 was measured as follows. The fuel tank 1 filled with a test fuel is suspended at a predetermined angle and left to stand at 65°C, and distances from a reference point to a few points of the fuel tank are measured to use the distances as zero points. The fuel tank 1 was left to stand for 5 minutes with an inner pressure being applied thereto, and then distances from the reference point were measured. Differences between the thus-measured distances and the zero points were considered as deformation amounts. The fuel tank 1 containing the inorganic filler at the above-specified ratio had a small deformation amount and was satisfactory for practical use.

Impact resistance of the fuel tank 1 was measured as follows. The fuel tank 1 was fixed to a surface plate, and a carriage to whose tip a cylinder is attached and having a predetermined weight was brought into collision with the fuel tank 1, followed by measurement of an amount of penetration of the cylinder part into the fuel tank 1. The amount of penetration detected when the inorganic filler was contained in the amount of 10 to 35 wt% with respect to the total amount of the outer main body and the amount of penetration detected when the inorganic filler was not contained were similar to each other, and there was no problem in terms of practical use.

Shown in Table 1 are results of evaluation of Examples 1 to 5 wherein the outer main body layer 12 contains talc as the inorganic filler and Comparative Examples 1 to 2 that did not contain talc.

**[Table 1]**

| | | **Ex. 1** | **Ex. 2** | **Ex. 3** | **Ex. 4** | **Ex. 5** | **Comp. Ex. 1** | **Comp. Ex. 2** |
|---|---|---|---|---|---|---|---|---|
| **Talc content in outer main body layer** | **Wt%** | 10 | 10 | 10 | 15 | 15 | 0 | 0 |
| **Physical properties of materials of outer main body layer** | **Flexural modulus** **(Mpa)** | 1100 | 1100 | 1100 | 1300 | 1300 | 950 | 950 |
| | **23°C IZOD impact resistance** **(J/m)** | 60 | 60 | 60 | 55 | 55 | 65 | 65 |
| | | **Ductile breaking** | **Ductile breaking** | **Ductile breaking** | **Ductile breaking** | **Ductile breaking** | **Ductile breaking** | **Ductile breaking** |
| **Tank specification** | **Thickness** **(mm)** | 5.4 | 4.8 | 4.2 | 4.2 | 3.9 | 5.4 | 4.2 |
| | **Structural Ratio (%)** | 45 | 45 | 45 | 45 | 45 | 45 | 45 |
| **Tank evaluation results: Index number when Comp. Ex. 1 is set to 100** | **Penetration amount in side impact test** | 100 | 110 | 130 | 130 | 140 | 100 | 130 |
| | **Maximum deformation by pressure** | 88 | 97 | 123 | 110 | 124 | 100 | 130 |

Examples 1 to 3 had the talc content in the outer main body layer of 10 wt%, Examples 4 and 5 had the talc content of 15 wt%, and Comparative Examples 1 and 2 did not contain talc. The tank of Example 1 had the thickness of 5.4 mm, and the tanks of Examples 2 to 5 were reduced in thickness as indicated above. The structural ratio in Table 1 means a ratio of the thickness of the outer main body layer 12 containing talc to the entire thickness of the tank.

The side impact test was conducted as a test for impact resistance of the fuel tank 1 as described above to measure a penetration amount of the cylindrical part. Values of Examples are shown in Table 1 by setting the value of Comparative Example 1 to 100. In the side impact test, the penetration amount was increased with a reduction in thickness of the tank, but the penetration was not more than a local deformation which was not problematic in terms of practical use.

The maximum pressure-deformation amount was measured as described above. In the same manner as in the side impact test, the values of Examples are shown in Table 1 by setting the value of Comparative Example 1 to 100. In comparison between Example 1 containing talc and Comparative Example 1 having the same tank thickness and not containing talc, the maximum deformation amount of Example 1 is 88, which is lower than that of Comparative Example 1. Also, Example 2 having the thickness of 4.8 mm achieves the lower deformation amount as compared to Comparative Example 1. Further, Example 3 having the thickness of 4.2 mm achieves the deformation amount that is lower than that of Comparative Example 2 not containing talc.

Further, Example 4 containing talc in the amount of 15 wt% achieves the deformation amount that is considerably lower than that of Comparative Example 2 having the same thickness, and Example 5 containing talc in the amount of 15 wt% and further reduced in thickness achieved the deformation amount lower than that of Comparative Example 2.

Also, it is possible to use an inorganic filler that has undergone a surface treatment. In this case, compatibility between the contained inorganic filler and high density polyethylene (HDPE) is improved to achieve good dispersion property into high density polyethylene (HDPE), and the reinforcing effect is improved to improve rigidity of the fuel tank 1, thereby suppressing swelling of the fuel tank 1.

For the surface treatment of the inorganic filler, a silane coupling agent, a titanium coupling agent, an aluminum coupling agent, or the like may be used. It is possible to use the coupling agents in combination of two or more. It is possible to perform the surface treatment by impregnating the inorganic filler into a solvent containing a coupling agent followed by boiling for removing the solvent.

The outer main body 12 contains the inorganic filler having the diameter of 10 µm or less in an amount of 10 to 35 wt% with respect to the total weight of the outer main body layer 12 and has the thickness of 25% to 50% of the entire thickness of the main body 10. Therefore, it is possible to achieve recycling of the fuel tank 1 that is formed mainly from high density polyethylene (HDPE), and, since rigidity of the fuel tank 1 is improved by the inorganic filler, it is possible to suppress swelling of the fuel tank 1 even when the inner pressure of the fuel tank is increased. Also, since the inorganic filler is contained in the predetermined amount, it is possible to ensure both of rigidity and impact resistance of the fuel tank 1.

The barrier layer 14 is formed from a thermoplastic resin that is considerably reduced in fuel permeation. As the thermoplastic synthetic resin forming the barrier layer 14, an ethylene-vinyl alcohol copolymer (EVOH), polybutylene telephthalate, polyethylenetelephthalate, polyphenylene sulfide (PPS), a liquid crystal polymer (LCP), or semi-aromatic nylon may be used, for example, and the ethylene-vinyl alcohol copolymer (EVOH) is preferred. Due to the barrier layer 14, it is possible to prevent permeation of a fuel oil such as gasoline that has permeated the inner main body layer 16 described later in this specification by the barrier layer 14 and to prevent evaporation of the fuel oil into the atmosphere.

In the case of using the ethylene-vinyl alcohol copolymer (EVOH) as the barrier layer 14, the barrier layer 14 is excellent in gasoline permeation prevention and in processability due to capability of melt molding. Also, the barrier layer 14 is excellent in gasoline permeation prevention under high moisture. Further, the barrier layer 14 has excellent permeation prevention to gasoline containing alcohol.

The outer adhesive layer 13 is provided between the outer main body layer 12 and the barrier layer 14 so that the two layers adhere to each other, and the inner adhesive layer 15 is provided between the inner main body layer 16 and the barrier layer 14 so that the two layers adhere to each other. The outer adhesive layer 13 and the inner adhesive layer 15 are made from an identical material that is a synthetic resin having adhesion property for both of high density polyethylene (HDPE) and the barrier layer 14. Therefore, the barrier layer 14 firmly adheres to the outer main body layer 12 and the inner main body layer 16 by the outer adhesive layer 13 and the inner adhesive layer 15, so that the layers are in close contact in an integral fashion to ensure fuel permeation prevention property and strength of the fuel tank 1.

As the adhesive synthetic resin to be used for the outer adhesive layer 13 and the inner adhesive layer 15, a modified polyolefin resin is usable, for example, and an unsaturated carboxylic acid-modified polyolefin resin, particularly an unsaturated carboxylic acid-modified polyethylene resin, is preferred. It is possible to produce the modified polyolefin resin by copolymerization or graft copolymerization of unsaturated carboxylic acid on a polyolefin resin.

For the inner main body layer 16, high density polyethylene (HDPE) that is the material used for the surface layer 11 is used as described in the description of the surface layer 11.

The inner main body layer 16 has a thickness of 15% to 67% of the entire thickness of the main body 10 of the fuel tank 1. Since the main body 10 has the entire thickness of 3 to 8 mm, the inner main body layer 16 has a thickness ranging from 0.45 mm to 5.36 mm. With such constitution, since the inner main body layer 16 has the sufficient thickness, the main body 10 of the fuel tank 1 maintains rigidity even when swollen due to fuel and ensures impact resistance.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An automobile fuel tank having a main body that is formed of a synthetic resin layer having a multilayer structure, wherein
the main body has an entire thickness of 3 to 8 mm and is formed at least of a surface layer, an outer main body layer, an outer adhesive layer, a barrier layer, an inner adhesive layer, and an inner main body layer that are formed in this order from exterior;
the surface layer and the inner main body layer are formed from high density polyethylene;
the outer main body layer is formed by using as a main material a recycled material mainly containing high density polyethylene, contains an inorganic filler having a particle diameter of 10 µm or less in an amount of 10 to 35 wt% with respect to a total weight of the outer main body layer, and has a thickness of 25% to 50% of the entire thickness of the main body;
the outer adhesive layer and the inner adhesive layer are formed from a synthetic resin having an adhesion property for both of the high density polyethylene and the barrier layer; and
the barrier layer is formed from a synthetic resin hardly or never allow fuel permeation.

2. The automobile fuel tank according to claim 1,
wherein the outer main body layer contains modified polyethylene or soft polyethylene.

3. The automobile fuel tank according to claim 1 or 2,
wherein the inorganic filler is a plate-like filler.

4. The automobile fuel tank according to claim 1, 2 or 3,
wherein the inorganic filler has undergone a surface treatment.

5. The automobile fuel tank according to any one of the preceding claims,
wherein the inorganic filler is talc or mica.

6. The automobile fuel tank according to any one of the preceding claims,
wherein the barrier layer is formed from an ethylene-vinyl alcohol copolymer.

7. The automobile fuel tank according to any one of the preceding claims,
wherein the inner main body layer has a thickness of 15% to 67% with respect to the entire thickness of the main body.

8. The automobile fuel tank according to any one of the preceding claims,
wherein the main body of the fuel tank is formed by blow molding.
